# EUROPÄISCHE PATENTSCHRIFT

(11) **EP 1 522 455 B1**
(45) Veröffentlichungstag und Bekanntmachung des Hinweises auf die Patenterteilung: **16.12.2009**
(21) Anmeldenummer: 04023739.8
(22) Anmeldetag: 06.10.2004
(51) Int. Cl.: B60P 7/14

(54) **Vorrichtung zur Festlegung und/oder Positionierung von Gegenständen in einem Transportbehälter**
Device for securing loads in transportation units
Dispositif de protection de chargement dans les unités de transport

(30) Priorität: 09.10.2003 DE 20315865 U; 09.08.2004 DE 202004012593 U
(43) Veröffentlichungstag der Anmeldung: 13.04.2005
(73) Patentinhaber: Schmidt, Ernst, 34628 Willingshausen (DE)
(72) Erfinder: Schmidt, Ernst, 34628 Willingshausen (DE)
(74) Vertreter: Freiherr von Schorlemer, Reinfried

(56) Entgegenhaltungen:
- DE-A1- 3 229 785
- SU-A2- 914 354
- US-A- 3 499 395
- US-A- 3 791 311

## Beschreibung

Die Erfindung betrifft eine Vorrichtung der im Oberbegriff des Anspruchs 1 angegebenen Gattung und einen mit einer solchen Vorrichtung ausgerüsteten Transportbehälter.

In Cargo-Flugzeugen, Eisenbahnwagen, Containern, Lastkraftwagen od. dgl. ergibt sich häufig das Problem, daß auf der Ladefläche eines Transportbehälters abgelegte Gegenstände mangels brauchbarer Befestigungsmöglichkeiten bei Brems- und Beschleunigungsmanövern oder bei Kurvenfahrten ungewollt hin und her rutschen. Das kann nicht nur zu Schäden an den Gegenständen, sondern insbesondere beim Transport von schweren, scharfkantigen Gegenständen auch zu Beschädigungen am Aufbau oder an Karosserieteilen der Fahrzeuge oder Container führen.

Es sind daher bereits Vorrichtungen bekannt geworden (GB-A-14 51 117), die zwei relativ zueinander verschiebbare, z. B. plattenförmige Bauteile aufweisen, von denen das eine als Montageelement ausgebildet ist und an einer Wand des Transportbehälters befestigt wird. Das andere Bauteil ist als Klemm- bzw. Halteelement ausgebildet und in einer Nichtgebrauchsstellung in der Nähe des Montageelements angeordnet, so daß zwischen ihm und einer gegenüber liegenden Wand des Transportbehälters ein ausreichend großer Freiraum zur Aufnahme der Gegenstände verbleibt. Soll die Ladung gesichert oder im Bereich einer Wand positioniert werden, wird das Halteelement derart gegen die Gegenstände bewegt, daß diese zwischen dem Halteelement und der gegenüber liegenden Wand fest eingespannt oder zumindest in einem Raum positioniert werden, der dann zwischen dem vorgeschobenen Halteelement und der gegenüber liegenden Wand gebildet ist.

Zur Durchführung der Bewegungen des Halteelements dient ein zwischen den beiden Bauteilen angeordneter und an diesen befestigter Gelenkmechanismus, der mittels einer senkrecht zur Bewegungsrichtung angeordneten Gewindestange betätigt wird, die gleichzeitig durch Selbsthemmung als Mittel zur Arretierung des Halteelements in einer vorgewählten Klemmstellung dient. Nachteilig dabei ist einerseits, daß die Vorrichtung einen vergleichsweise komplizierten Aufbau hat. Andererseits ist der Zugang zur Gewindespindel erschwert, wenn es sich um Transportbehälter mit hoch aufragenden Seitenwänden handelt und beengte Raumverhältnisse vorliegen, wie dies beispielsweise für kleinere Transportbehälter wie z.B. übliche Gitterboxen gilt.

Daneben sind Vorrichtungen der eingangs bezeichneten Gattung bekannt (EP-A-0 737 601), bei denen die beiden Bauteile mit Hilfe eines Gelenkmechanismus relativ zueinander bewegt werden können, der eine Mehrzahl von scherengitterartig miteinander verbundenen Hebeln aufweist. Die Endabschnitte der Hebel sind mit Hilfe von Gleitstücken in quer zur Bewegungsrichtung angeordneten Führungen verschiebbar gelagert. Außerdem ist dem Gelenkmechanismus ein Mittel zur Arretierung des Halteelements in einer vorgewählten Lage zugeordnet, das eine Feststellschraube oder ein Klemmelement enthält. Diese bekannte Vorrichtung ist insbesondere für die Kofferräume von Personenkraftwagen bestimmt und auch bei beengten Raumverhältnissen brauchbar, da sie im Gegensatz zu der beschriebenen, eine Gewindespindel aufweisenden Vorrichtung von einer Vorder- bzw. Rückwand des Transportbehälters her betätigt werden kann. Nachteilig bei dieser Vorrichtung ist allerdings, daß sie nicht ausreichend stabil und verbindungssteif ist, wenn es sich um Festlegung von schweren Gegenständen mit Massen von z. B. 200 kg und mehr handelt.

Schließlich sind Vorrichtungen der eingangs bezeichneten Gattung bekannt (DE 32 29 785 A1, US 3 499 395 A, US 3 791 311 A), die mindestens je zwei Y-förmige Gelenkmechanismen aufweisen, wodurch eine konstruktiv einfache Vorrichtung mit höherer Stabilität und Verwindungssteifigkeit erhalten wird.

Demgegenüber davon besteht das technische Problem der vorliegenden Erfindung darin, die Vorrichtung der eingangs bezeichneten Gattung so auszubilden, daß sie sich insbesondere zur Anwendung in rundum geschlossenen Transportbehältern wie z. B. Gitterboxen od. dgl. eignet und mit einem Gelenkmechanismus versehen ist, der bei Bedarf zumindest in begrenztem Umfang auch eine schräge relative Anordnung der beiden Bauteile zueinander zuläßt.

Zur Lösung dieses Problems dienen die kennzeichnenden Merkmale der Ansprüche 1 und 17.

Die Erfindung bringt den Vorteil mit sich, daß die Y-förmige Ausbildung des Gelenkmechanismus nicht nur einen konstruktiv einfachen, aber dennoch stabilen und verwindungssteifen Aufbau der Vorrichtung, sondern auch andere als lediglich parallele Stellungen der beiden Bauteile relativ zueinander ermöglicht. Ferner können die verschiedenen Schenkel des Gelenkmechanismus in Abhängigkeit von der erforderlichen Stabilität und Verwindungssteifigkeit entweder als einfache, Gewicht einsparende Stangen, aber auch als versteifend wirkende, rahmen- oder plattenförmige Elemente ausgebildet sein. Besonders vorteilhaft ist, daß die beiden Bauteile aufgrund der Dreiecksform der langen Schenkel bis auf einen Abstand aneinander angenähert werden können, der praktisch der Summe der Dicken der Schenkel entspricht.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
Fig. 1 eine schematische Draufsicht auf einen Transportbehälter mit einer eingebauten Vorrichtung gemäß eines ersten Ausführungsbeispiels der Erfindung;
Fig. 2 eine perspektivische Darstellung allein der Vorrichtung nach Fig. 1;
Fig. 3 und 4 den Fig. 1 und 2 entsprechende Ansichten für einen Betriebszustand, bei dem die erfindungsgemäße Vorrichtung weniger stark als in Fig. 1 und 2 ausgefahren ist;
Fig. 5 und 6 den Fig. 3 und 4 entsprechende Ansichten in einem zusammengeklappten Betriebszustand der erfindungsgemäßen Vorrichtung;
Fig. 7 eine perspektivische Rückansicht eines als Montageelement dienenden Bauteils der Vorrichtung der Fig. 1 bis 6 unter Weglassung eines als Halteelement dienenden Bauteils;
Fig. 8 eine schematische Rückansicht eines als Montageelement dienenden Bauteils in Verbindung mit einem Arretiermittel und bei Weglassung aller übrigen Bauelemente;
Fig. 9 und 10 eine vergrößerte Einzelheit X der Fig. 7 in zwei unterschiedlichen Betriebsstellungen;
Fig. 11 eine schematische Draufsicht entsprechend Fig. 1, jedoch bei schräger Anordnung eines als Halteelement ausgebildeten Bauteils der Vorrichtung; und
Fig. 12 eine perspektivische Ansicht eines zweiten Ausführungsbeispiels der erfindungsgemäßen Vorrichtung.

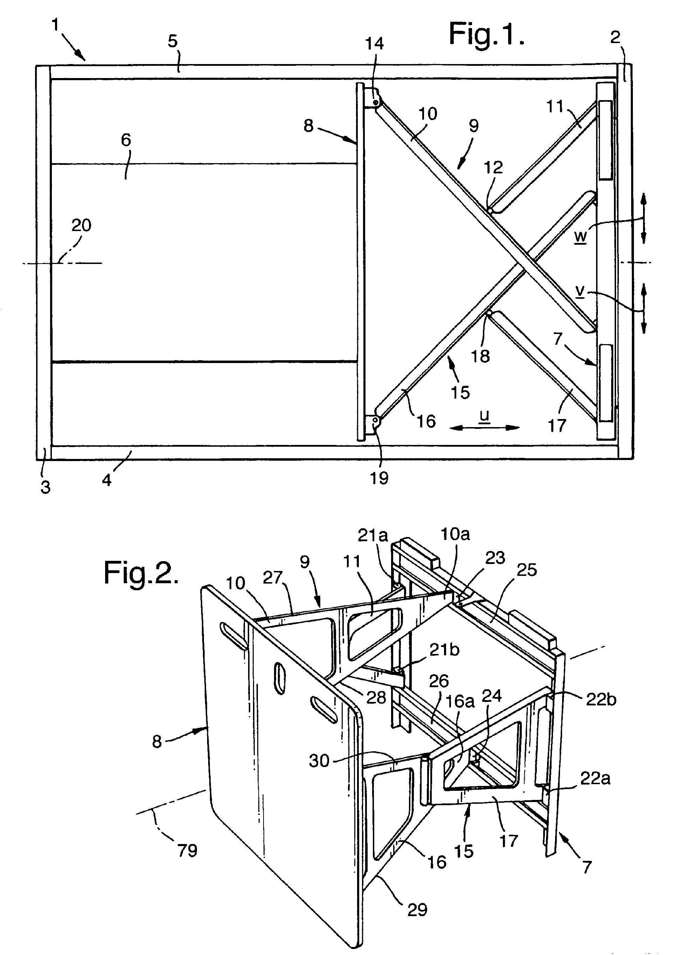

Fig. 1 zeigt grob schematisch einen Transportbehälter 1, z. B. eine Gitterbox, die ein auf Füßen abgestütztes Bodenteil, eine erste Stirnwand 2, eine der ersten Stirnwand 2 gegenüber liegende und zu ihr parallele, zweite Stirnwand 3 und die beiden Stirnwände 2, 3 verbindende Seitenteile 4 und 5 aufweist. In dem Transportbehälter 1 ist ein schematisch angedeuteter Gegenstand 6 angeordnet, der für die Zwecke des Transports rutschfrei festgelegt werden soll.

Erfindungsgemäß ist dazu eine in Fig. 1 bis 6 schematisch dargestellte Vorrichtung vorgesehen. Diese enthält zwei z. B. plattenförmige Bauteile 7 und 8, die im wesentlichen parallel zueinander angeordnet sind. Im Ausführungsbeispiel ist angenommen, daß das Bauteil 7 als Montageelement dient und mit nicht näher dargestellten Befestigungselementen an den Innenseite der Stirnwand 2 befestigt wird. Das Bauteil 7 kann zur Gewichtseinsparung auch als rechteckiger Rahmen ausgebildet sein, wie Fig. 2 zeigt, und dazu eine mittlere Aussparung aufweisen. Dagegen hat das andere Bauteil 8 hier die Funktion eines Halteelements, das den Gegenstand 6 gegen die Innenseite der gegenüber liegenden Stirnwand 3 drückt und dadurch rutschfrei im Transportbehälter 1 festlegt. Das Bauteil 8 ist daher vorzugsweise eine durchgehende Platte. Zur Verschiebung des Bauteils 8 relativ zum Bauteil 7 in Richtung eines Doppelpfeils u dient ein allgemein durch das Bezugszeichen 9 bezeichneter Gelenkmechanismus, der nachfolgend anhand der Fig. 1 bis 6 schematisch erläutert wird.

Der Gelenkmechanismus 9 ist Y-förmig ausgebildet und weist einen langen Schenkel 10 und einen kurzen Schenkel 11 auf. Der kurze Schenkel 11 ist an einem Ende durch ein Schwenklager 12 schwenkbar mit einem mittleren Bereich des langen Schenkels 10 und an einem entgegengesetzten Ende durch ein weiteres Schwenklager schwenkbar mit dem Bauteil 7 verbunden. Dagegen ist der lange Schenkel 10 an einem Ende am Bauteil 8 mittels eines Schwenklagers 14 schwenkbar gelagert und mit seinem anderen Ende verstellbar mit dem Bauteil 7 verbunden. "Verstellbar" soll hier bedeuten, daß der Endabschnitt des Schenkels 10 parallel zu einem Doppelpfeil v, d. h. senkrecht zum Pfeil u und senkrecht zur Vertikalen längs des Bauteils 7 verschoben werden kann.

Zur Verbesserung der Stabilität und Verwindungssteifigkeit ist vorzugsweise ein zweiter, ebenfalls Y-förmiger und im wesentlichen gleichartiger bzw. baugleicher Gelenkmechanismus 15 vorgesehen, der einen langen Schenkel 16 und einen kurzen Schenkel 17 aufweist. Analog zum Gelenkmechanismus 9 ist der kurze Schenkel 17 durch ein Schwenklager 18 mit einem mittleren Bereich des langen Schenkels 16 und durch ein weiteres Schwenklager mit dem Bauteil 7 verbunden, während der lange Schenkel 16 durch ein Schwenklager 19 schwenkbar mit dem Bauteil 8 und in Richtung eines zum Pfeil v parallelen Pfeils w verschiebbar bzw. verstellbar mit dem Bauteil 7 verbunden ist. Wie Fig. 1 außerdem zeigt, sind die beiden Gelenkmechanismen 9 und 15 vorzugsweise spiegelsymmetrisch zu einer zum Pfeil u parallelen Mittelebene 20 der Vorrichtung angeordnet. Dabei sind die Lagen der Schwenklager 14, 19 so gewählt, daß die Endabschnitte der langen Schenkel 10, 16 jeweils an einer Außenseite des Bauteils 8 zu liegen kommen. Die Anlenkpunkte für die kurzen Schenkel 11, 17 sind entsprechend jeweils an einer Außenseite des Bauteils 7 gelegen, wie Fig. 1 bis 6 zeigen.

Wie insbesondere Fig. 2 zeigt, ist der lange Schenkel 10 vorzugsweise dreieckförmig ausgebildet, wobei eine Dreieckseite schwenkbar mit dem Bauteil 8 verbunden ist, während eine dieser Dreieckseite gegenüber liegende Dreieckspitze 10a verstellbar am Bauteil 7 gelagert ist. Entsprechendes gilt für den langen Schenkel 16 und eine Dreieckspitze 16a desselben. Die kurzen Schenkel 11, 17 sind vorzugsweise dreieckförmig oder trapezförmig ausgebildet, wobei in Fig. 2 zwei Paare von Schwenklagern 21a und 21b bzw. 22a und 22b mit jeweils koaxialen Schwenkachsen für die Schenkel 11 bzw. 17 erkennbar sind. Schließlich zeigt Fig. 2, daß die langen und kurzen Schenkel mit besonderem Vorteil jeweils rahmenförmig ausgebildet, d. h. zur Gewichtseinsparung mit mittleren Aussparungen versehen sind.

Die verstellbare Lagerung der langen Schenkel 10, 16 am Bauteil 7 erfolgt beispielsweise dadurch, daß an den Enden der Schenkel 10, 16 bzw. an deren Dreieckspitzen 10a, 16a jeweils Laufrollen 23, 24 drehbar gelagert sind, die in C-förmigen, zum Bauteil 8 hin offenen Führungsschienen 25, 26 abrollen können, aus denen am oberen bzw. unteren Rand des rahmenförmigen Bauteils 7 erstreckte Querstreben ausgebildet sind, wobei diese Führungsschienen 25, 26 parallel zu den Pfeilen v und w angeordnete Laufbahnen für die Laufrollen 23, 24 bilden.

Schließlich läßt Fig. 2 erkennen, daß die Laufrolle 23 für den langen Schenkel 10 in der oberen Führungsschiene 25 und die Laufrolle 24 für den langen Schenkel 16 in der unteren Führungsschiene 26 des Bauteils 7 gelagert ist. Der Grund hierfür ist weiter unten erläutert.

Im übrigen sind die beiden parallelen Bauteile 7, 8 im Gebrauchszustand der Vorrichtung im wesentlichen vertikal und senkrecht zum Boden des Transportbehälters 1 erstreckt. Dasselbe gilt für die Schwenkachsen der verschiedenen Schwenklager 12, 14, 18, 19, 21 und 22 (vgl. Fig. 2). Entsprechend sind die die Schenkel 10, 11 bzw. 16, 17 bildenden Platten bzw. Rahmen mit ihren Mittelebenen senkrecht zum Boden des Transportbehälters angeordnet. Dagegen sind die Führungsschienen 25, 26 parallel zum Boden und im Gebrauchszustand horizontal angeordnet.

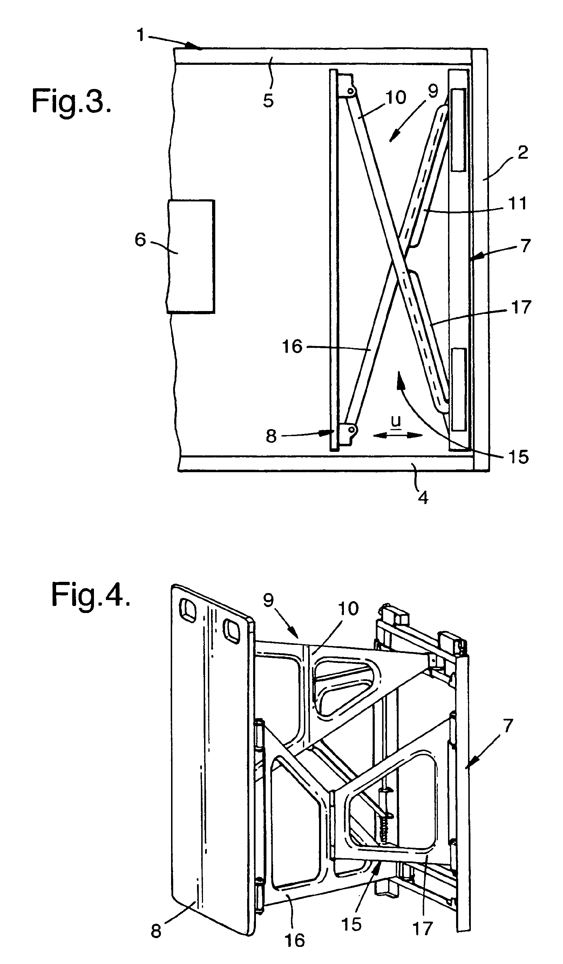

Aufgrund der beschriebenen Anordnung ist es möglich, wie Fig. 3 und 4 zeigen, das Bauteil 8 parallel zum Pfeil u bzw. parallel zur Mittelebene 20 zu bewegen, wobei die Enden der langen Schenkel 10, 16 bzw. deren Laufrollen 23, 24 parallel zu den Pfeilen v bzw. w verschoben bzw. verstellt werden. Wird dadurch der Abstand der Bauteile 7 und 8 reduziert, wie ein Vergleich der Fig. 1, 2 mit den Fig. 3, 4 zeigt, dann bewegen sich die verstellbaren Enden der Schenkel 10 und 16, die ursprünglich z.B. nahe der Mittelebene 20 angeordnet waren (Fig. 1), weiter von dieser weg (Fig. 3), während bei umgekehrter Bewegung der Laufrollen 23, 24 der Abstand der Bauteile 7, 8 vergrößert wird.

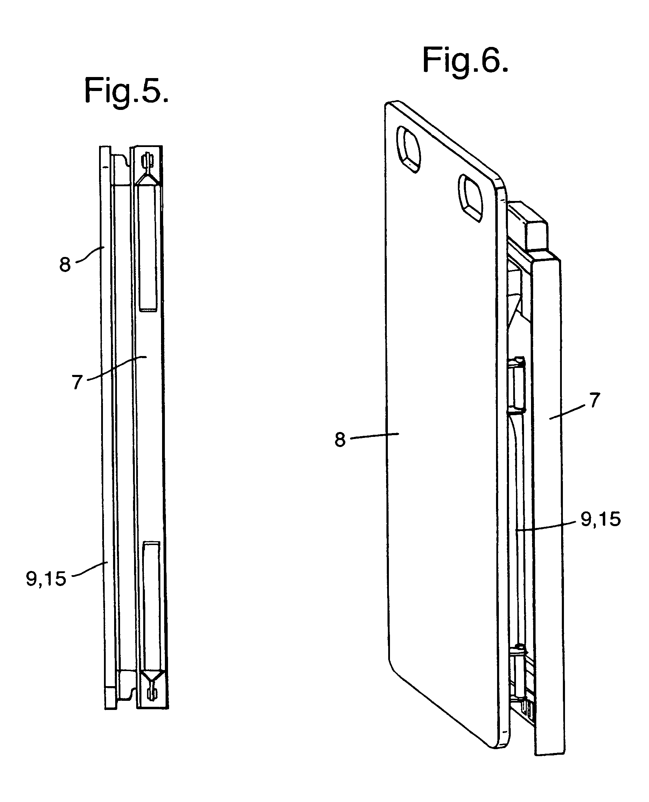

Bei noch weiterer Verschiebung der Laufrollen 23, 24 nach außen bzw. von der Mittelebene 20 weg wird schließlich eine Stellung erreicht (Fig. 5, 6), in welcher die Bauteile 7, 8 ihren kleinsten möglichen Abstand voneinander haben. Dieser Abstand ist durch die Abmessungen der zwischen den Bauteilen 7, 8 befindlichen Teile der Gelenkmechanismen 9, 15 bestimmt.

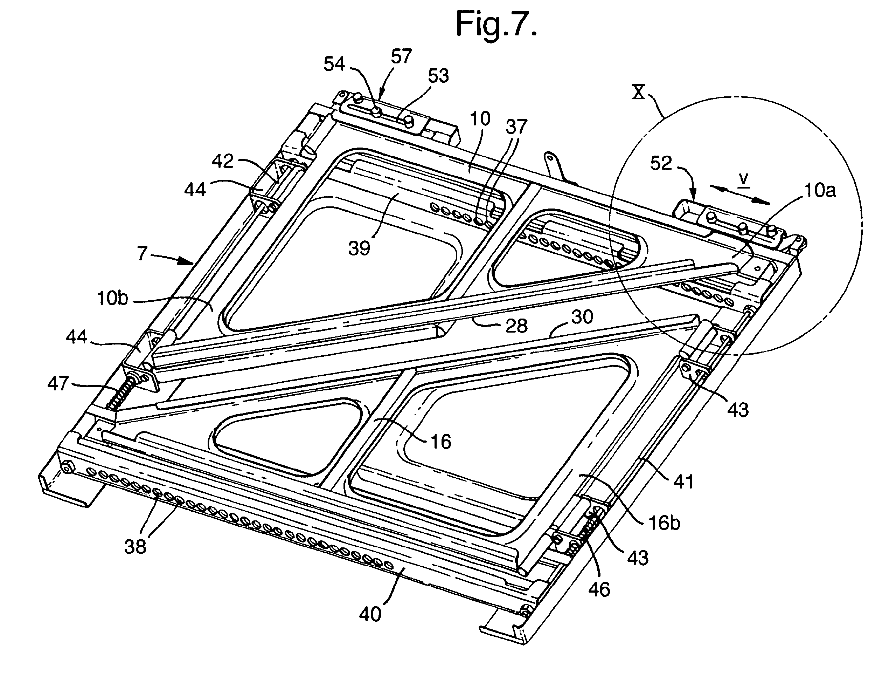

Zur Ermöglichung eines möglichst kleinen Abstands dienen die Lagerung der Laufrollen 23, 24 in einer oberen bzw. unteren Führungsschiene 25 bzw. 26 und die dreieckförmige Ausbildung der langen Schenkel 10 und 16. Wie insbesondere Fig. 2 zeigt, ist eine Oberkante 27 des Schenkels 10 zwischen der Dreieckspitze 10a bzw. der in der oberen Führungsschiene 25 gelagerten Laufrolle 23 und dem gegenüber liegenden Bauteil 8 im wesentlichen horizontal erstreckt, während eine Unterkante 28 des Schenkels 10 von der Dreieckspitze 10a aus schräg nach unten bis nahe zum unteren Rand des Bauteils 8 erstreckt ist. Umgekehrt ist beim langen Schenkel 16 eine Unterkante 29, ausgehend von der unten gelagerten Laufrolle 24, im wesentlichen horizontal bis zum Bauteil 8 erstreckt, während eine Oberkante 30 des Schenkels 16 von der Dreieckspitze 16a aus schräg nach oben bis nahe zum oberen Rand des Bauteils 8 erstreckt ist. Werden daher die beiden Gelenkmechanismen 9 und 15 unter Verkleinerung des Abstandes der beiden Bauteile 7, 8 immer stärker verschwenkt, wie der Übergang von Fig. 3, 4 zu Fig. 5, 6 zeigt, dann nehmen die Unterkante 28 des Schenkels 10 und die Oberkante 30 des Schenkels 16 immer mehr die Lage einer Diagonalen zum Bauteil 7 ein, wie in Fig. 7 schematisch angedeutet ist. Dabei wird die Anordnung vorzugsweise so gewählt, daß sich die beiden Kanten 28, 30 mit geringem Abstand gegenüber stehen und daher die beiden Schenkel 10, 16 untereinander angeordnet sind, so daß sie so nah an die Bauteile 7, 8 herangeklappt werden können, bis sie praktisch parallel zwischen diesen angeordnet sind. Außerdem wird die Anordnung zweckmäßig so getroffen, daß die beiden kurzen Schenkel 11, 17 beim Annähern der Bauteile 7 und 8 immer stärker um die Schwenklager 12, 18 verschwenkt werden, bis sie ebenfalls im wesentlichen parallel zu den Bauteilen 7 und 8 und daher zwischen diesen und den zugehörigen langen Schenkeln 10, 16 liegen. Dieser Zustand ist insbesondere in Fig. 5, 6 und 7 dargestellt.

Aufgrund der beschriebenen Bauweise entspricht der Abstand der Bauteile 7, 8 im vollends zusammengeklappten Zustand praktisch der Summe der Dicken der Bauteile 7, 8 einerseits und der Summe der Dicken der Schenkel 10, 11 bzw. 16, 17 andererseits. In diesem Zustand verkleinert die erfindungsgemäße Vorrichtung daher den befüllbaren Raum innerhalb des Transportbehälters 1 nur wenig. Dennoch können sich die schwenkbar gelagerten Dreiecksseiten der langen Schenkel 10 und 16, die in Fig. 7 mit dem Bezugszeichen 10b und 16b bezeichnet sind, über einen großen Teil ihrer Höhe und mehr als die Hälfte der Höhe des Bauteils 8 erstrecken, und dasselbe gilt nach Fig. 2 für die Höhe derjenigen Teile der kurzen Schenkel 11 und 17, die an das Bauteil 7 angelenkt sind. Dadurch werden eine besonders hohe Stabilität und Verwindungssteifigkeit und dennoch ein geringer Raumbedarf im zusammengeklappten Zustand der Vorrichtung erreicht.

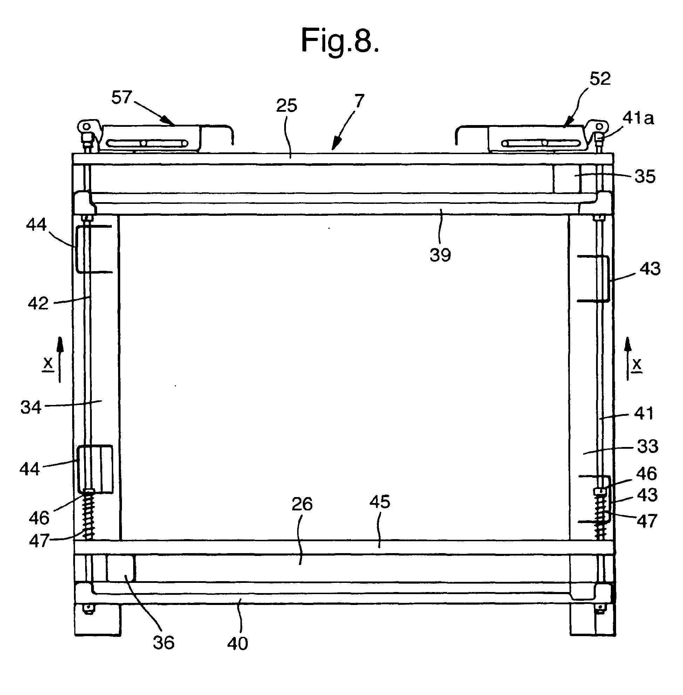

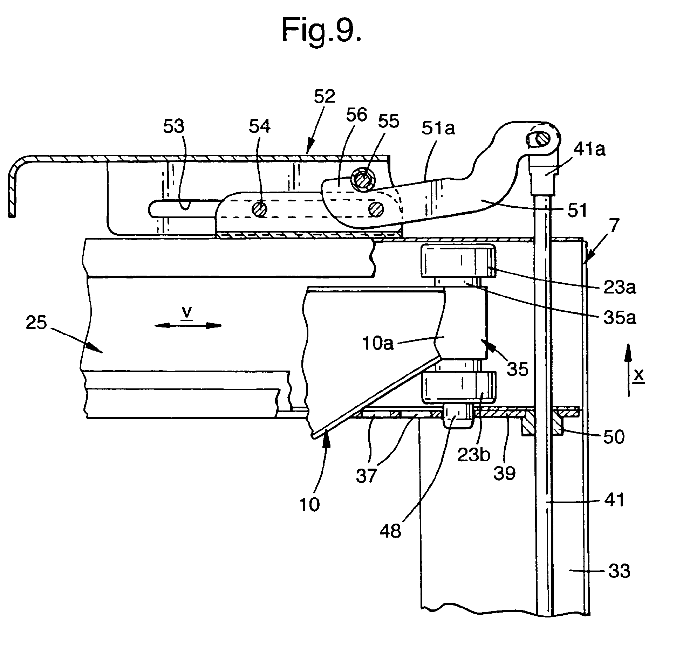

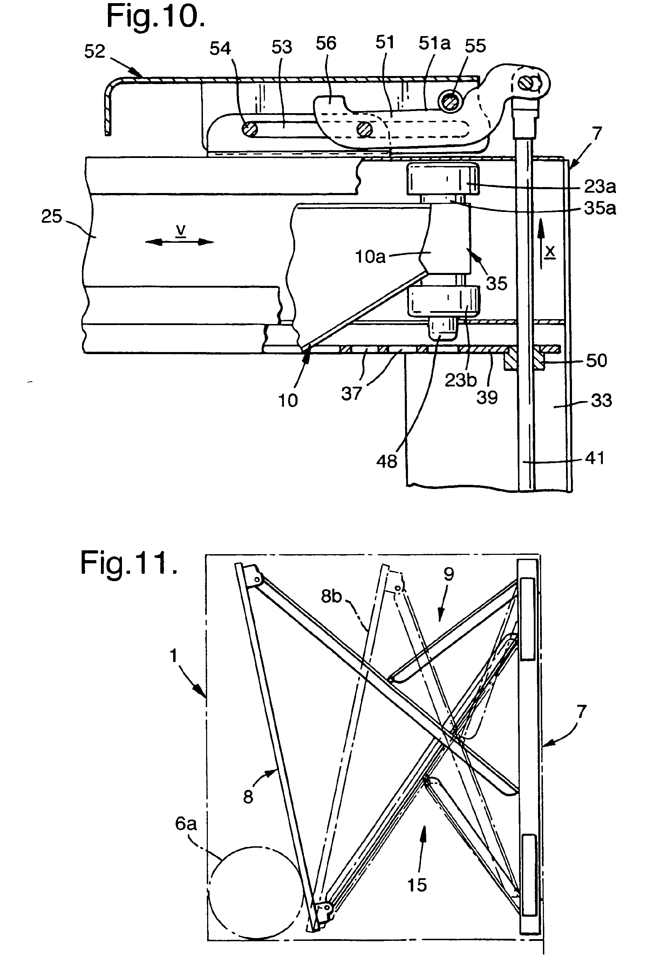

Fig. 8 zeigt schematisch eine Hinteransicht des als Montageelement verwendeten Bauteils 7 ohne die Gelenkmechanismen 9, 15 und ohne das Bauteil 8, jedoch mit einem Mittel zur Arretierung der Bauteile 7, 8 in den mittels der Gelenkmechanismen 9, 15 herstellbaren Relativstellungen. Einzelheiten des Arretiermittels sind in Fig. 9 und 10 in zwei unterschiedlichen Betriebsstellungen dargestellt. Danach enthält das Bauteil 7 je ein oberes und unteres, durch die Führungsschienen 25, 26 gebildetes Rahmenteil und zwei diese verbindende, in der Betriebsstellung vertikale Seitenteile 33 und 34. In der oberen Führungsschiene 25 ist ein mit der Laufrolle 23 versehener Schlitten 35 und in der unteren Führungsschiene 26 ein mit der Laufrolle 24 versehener Schlitten 36 verschiebbar gelagert. Wie insbesondere Fig. 9 und 10 in einer teilweise aufgebrochenen Darstellung zeigen, ist die Laufrolle 23 zweiteilig ausgebildet und mit je einem oberen und unteren Rollenteil 23a, 23b versehen, zwischen denen eine Achse 35a des Schlittens 35 angeordnet ist, die zur schwenkbaren Befestigung der Dreieckspitze 10a des langen Schenkels 10 dient. In entsprechender Weise ist die Anordnung im Bereich des Schlittens 36 getroffen, an dem die Dreieckspitze 16a des langen Schenkels 16 befestigt ist.

Unterhalb der Führungsschienen 25, 26 ist je eine mit Löchern 37, 38 (vgl. auch Fig. 7) versehene Leiste 39 bzw. 40 angeordnet, deren seitliche Enden an je einer Betätigungsstange 41 bzw. 42 befestigt sind. Die Betätigungsstangen 41, 42 sind z. B. in den Durchgängen von Halterungen 43, 44 sowie von einer oberhalb der unteren Führungsschiene 26 montierten Halteschiene 45 verschiebbar gelagert, wobei die Halterungen 43, 44 und die Halteschiene 45 an den Rückseiten der Rahmenteile 33, 34 befestigt sind und eine parallel zu ihnen erfolgende, d. h. in der Betriebsstellung z. B. vertikale Bewegung der Betätigungsstangen 41, 42 zulassen. Zwischen radialen, an den Betätigungsstangen 41, 42 angebrachten Vorsprüngen 46 und der Halteschiene 45 sind Druckfedern 47 (Fig. 8) auf die Betätigungsstangen 41, 42 aufgezogen. Dadurch werden die Betätigungsstangen 41, 42 in Fig. 8 in Richtung von Pfeilen x vertikal nach oben vorgespannt und die Leisten 39, 40 von unten gegen die Führungsschienen 25 bzw. 26 gedrückt. Durch Druck auf die Betätigungsstangen 41, 42 in einer zu den Pfeilen x entgegengesetzten Richtung können die Leisten 39, 40 gegen die Wirkung der Federn 47 nach unten gedrückt und von den Führungsschienen 25, 26 abgehoben werden.

Fig. 9 und 10 zeigen Einzelheiten des Mittels zur Arretierung am Beispiel der Dreieckspitze 10a und der daran befestigten Laufrolle 23 des langen Schenkels 10 nach Fig. 2, wobei in Fig. 9 eine Arretierstellung und in Fig. 10 eine Entarretierstellung dargestellt ist. Daraus ist ersichtlich, daß der verstellbare, lange Schenkel 10 mit seiner endseitigen Dreieckspitze 10a bzw. seiner Laufrolle 23 nicht nur in Richtung des Doppelpfeils v in der Führungsschiene 25 verschoben werden kann (vgl. auch Fig. 1), sondern daß auch an der Unterseite der Dreieckspitze 10a bzw. der Laufrolle 23 ein Raststift 48 angebracht ist. Dieser Raststift 48 dient dem Zweck, in eines der Löcher 37 der Leiste 39 einzurasten und dadurch die Lage des Endabschnitts des langen Schenkels 10 am Bauteil 7 in Richtung des Pfeils v festzulegen. Diese Raststellung ist durch die Feder 47 gesichert (Fig. 9).

Soll der Schenkel 10 bzw. seine Laufrolle 23 verschoben werden, um einen anderen Abstand der beiden Bauteile 7, 8 herzustellen, wird die Betätigungsstange 41 gegen die Kraft der Feder 47 nach unten in die aus Fig. 10 ersichtliche Position verschoben. Dabei nimmt die bei 50 an der Leiste 39 befestigte Betätigungsstange 41 die Leiste 39 an ihrem in Fig. 8 rechten Ende entgegen der Richtung des Pfeils x mit, bis der Raststift 48 aus dem betreffenden Loch 37 herausgetreten ist. Danach kann der Schenkel 10 bei herabgedrückter Betätigungsstange 41 parallel zum Pfeil v verschoben werden, bis eine neue gewünschte Relativstellung der beiden Bauteile 7, 8 hergestellt ist. Im Anschluß daran wird die Betätigungsstange 41 losgelassen und dadurch unter der Wirkung der Feder 47 in Richtung des Pfeils x nach oben gedrückt, wobei der Raststift 48 wieder in ein Loch 37 der Leiste 39 einrasten kann.

Die untere Leiste 40 (Fig. 7 und 8) wird auf ihrer rechten Seite in entsprechender Weise durch die Betätigungsstange 41 betätigt. Außerdem dient die Betätigungsstange 42 dem Zweck, die Leisten 39, 40 an ihren in Fig. 8 linken Enden in derselben Weise zu betätigen, wie oben für die rechten Enden beschrieben wurde. Dabei können beide Betätigungsstangen 41, 42 wahlweise gemeinsam oder einzeln und unabhängig voneinander betätigt werden. Beim Herabdrücken z.B. allein der Betätigungsstange 42 wird im Ausführungsbeispiel analog zu Fig. 9 und 10 bevorzugt nur das Laufrad 24 bzw. der Schlitten 36 (Fig. 8) frei gegeben, wozu die Leiste 40 derart verschwenkbar gelagert ist, daß dabei der Schlitten 35 in der aus Fig. 9 ersichtlichen Weise verriegelt bleibt.

Zur Betätigung der Betätigungsstange 41 ragt diese mit einem Kopfstück 41a über die obere Führungsschiene 25 hinaus nach oben. Das Kopfstück 41a ist dort schwenkbar mit dem einen Ende eines Hebels 51 verbunden, dem ein zu seiner Betätigung bestimmter, auf der Führungsschiene 25 verschiebbar gelagerter Schieber 52 zugeordnet ist. Der Schieber 52 ist mit einem Langloch 53 versehen, das von Führungsstiften 54 durchragt ist, die so auf der Oberseite der Führungsschiene 25 montiert sind, daß der Schieber 52 in Richtung des Pfeils v um ein durch die Länge des Langlochs 53 vorgegebenes Maß hin und her bewegt werden kann.

Am Schieber 52 ist ferner ein Steuerstift 55 befestigt, der hinter einen Sperrhaken 56 des im wesentlichen senkrecht zur Betätigungsstange 41 angeordneten Hebels 51 greift und in einer Arretierstellung gemäß Fig. 9 an diesem so anliegt, daß die angelenkte Betätigungsstange 41 ihre höchste Stellung, d. h. die Arretierstellung einnehmen kann und gleichzeitig eine Oberkante 51a des Hebels 51 entsprechend Fig. 9 leicht schräg zur Oberfläche der Führungsschiene 25 angeordnet ist. Soll aus dieser Position heraus die Entarretierungsstellung hergestellt werden, wird der Schieber 52 in Fig. 9 nach rechts bewegt, wodurch der Steuerstift 55 auf die schräge Oberkante 51a des Hebels 51 aufläuft und diesen dadurch allmählich herabdrückt, bis er die aus Fig. 10 ersichtliche Entarretierungsstellung erreicht hat. In dieser Lage sind die Betätigungsstange 41 und das rechte Ende der Leiste 39 so weit herabgedrückt, daß der Raststift 48 aus der Leiste 39 herausgetreten ist. Soll danach wieder die Arretierungsstellung hergestellt werden, wird der Schlitten 52 in entgegengesetzter Richtung verschoben (Fig. 9).

Im übrigen ist aus Fig. 7 und 8 ersichtlich, daß für beide Betätigungsstangen 41, 42 entsprechende, jedoch spiegelsymmetrisch angeordnete und ausgebildete Schieber 52 und 57 und diesen zugeordnete Hebel 51 vorhanden sind.

Die Erfindung bringt den Vorteil mit sich, daß mit einfachen Mitteln eine Vorrichtung geschaffen wurde, die ein sicheres Festlegen der Gegenstände 6 in dem Transportbehälter 1 ermöglicht. Handelt es sich dabei um Gegenstände 6, bei denen zu ihrer Festlegung eine Verschiebung des gesamten Bauteils 8 parallel zum Pfeil u (Fig. 1) ausreicht, werden die anhand der Fig. 7 bis 10 beschriebenen Schieber 52 und 57 gleichzeitig in die Entarretierungsstellung verschoben, wodurch die beiden Leisten 39, 40 auf ihrer ganzen Länge von den Führungsschienen 25, 26 abgehoben und dadurch die Raststifte 48 beider Laufrollen 23, 24 freigegeben werden. Nach der gewünschten Verschiebung werden die Schieber 52, 57 in ihre Arretierstellungen zurückbewegt.

Handelt es sich dagegen um einen Gegenstand wie z. B. ein Faß, eine Tonne od. dgl. mit einem derartigen Querschnitt, daß er durch die beiden Bauteile 7 und 8, so lange diese eine Parallelstellung einnehmen, nicht sicher genug verspannt werden kann, dann bietet die erfindungsgemäße Vorrichtung in besonders vorteilhafter Weise auch die Möglichkeit, das Bauteil 8 in eine schräge Lage relativ zum anderen Bauteil 7 zu bringen, indem nur einer der beiden Schieber 52, 57 in die Entarretierungsstellung gebracht wird. Infolge dieser Betätigung werden die beiden Leisten 39, 40 nur auf einer Seite, d. h. z. B. in Fig. 8 rechts oder links von den Führungsschienen 25, 26 abgehoben. Dadurch werden nur diejenigen Raststifte 48 gelöst, die gerade auf dieser Seite des Bauteils 7 angeordnet sind. Wird die Anordnung entsprechend Fig. 2, 3 und 8 so getroffen, daß die einzige Laufrolle 23 des einen langen Schenkels 10 z. B. in der oberen Führungsschiene 25 und die einzige Laufrolle 25 des anderen langen Schenkels 16 in der unteren Führungsschiene 26 über einen größeren Teil des Verstellbereichs hinweg weitgehend auf der einen bzw. anderen Seite der Führungsschienen 25, 26 angeordnet sind, dann kann auf diese Weise z. B. die Laufrolle 23 bzw. der Schlitten 35 festgelegt und die Laufrolle 24 bzw. der Schlitten 36 gelöst werden bzw. umgekehrt. Bei entsprechender Wahl der Hebelverhältnisse, die insbesondere aus Fig. 1 ersichtlich sind, und beim Vorgeben ausreichender Toleranzen kann das Bauteil 8 dann in der einen oder anderen Richtung relativ zum Bauteil 7 verschwenkt werden, wie Fig. 11 beispielhaft mit einer durchgezogenen, bei gelöster Laufrolle 24 herstellbaren Position 8a und mit einer gestrichelten, bei gelöster Laufrolle 23 herstellbaren Position 8b zeigt. Dadurch ist es außerdem möglich, einen Gegenstand 6a z.B. in einer Ecke des Transportbehälters 1 anzuordnen und dadurch gleichzeitig zu positionieren, wie schematisch in Fig. 11 angedeutet ist.

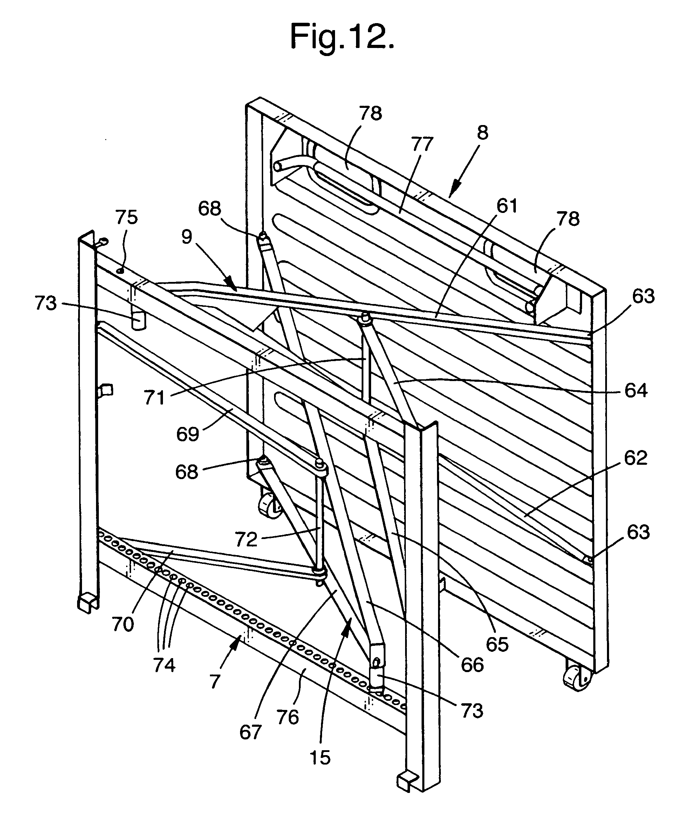

Während Fig. 1 bis 11 ein derzeit für am besten gehaltenes Ausführungsbeispiel der Erfindung zeigen, ist in Fig. 12 ein zweites Ausführungsbeispiel dargestellt. Dabei sind gleiche Teile mit denselben Bezugszeichen wie in Fig. 1 bis 11 versehen. Im Gegensatz zu Fig. 1 bis 11 enthält der erste Gelenkmechanismus 9 einen langen Schenkel, der aus zwei V-förmig angeordneten und in der Spitze der V-Form fest miteinander verbundenen Stangen 61 und 62 besteht, die an ihren von der Spitze entfernten Enden am Bauteil 8 mit Hilfe von Schwenklagern 63 schwenkbar befestigt sind, sowie einen kurzen Schenkel, der aus zwei im wesentlichen parallelen Stangen 64, 65 besteht, deren einen Enden an derselben, den Schwenklagern 63 gegenüber liegenden Seite des Bauteils 7 schwenkbar befestigt sind. Entsprechend enthält der zweite Gelenkmechanismus 15 einen langen Schenkel, der aus V-förmig angeordneten und an ihrer Spitze miteinander verbundenen Stangen 66, 67 besteht, deren von der Spitze entfernten Enden auf der von den Schwenklagern 63 abgewandten Seite des Bauteils 8 mit Schwenklagern 68 befestigt sind, und einen aus im wesentlichen parallelen Stangen 69, 70 bestehenden kurzen Schenkel, der an einem Ende am Bauteil 7 schwenkbar befestigt ist. Außerdem sind die kurzen Schenkel an ihren jeweils anderen Enden mittels je einer Schwenkachse 71, 72 an einem mittleren Bereich der langen Schenkel bzw. der Stangen 61, 62 und 66, 67 schwenkbar befestigt. Im Unterschied zu Fig. 1 bis 11 fehlen somit zwar bei den langen und kurzen Schenkeln die zwischen den Stangen 61, 62 usw. angeordneten Wandteile, woraus eine besonders leichtgewichtige Konstruktion resultiert. Dennoch weisen aber auch bei diesem Ausführungsbeispiel die aus den langen und kurzen Schenkeln gebildeten Gelenkmechanismen 9, 10 in der Draufsicht die für die Erfindung charakteristische Y-Form auf.

Die an der Spitze endenden, der Verstellung dienenden Enden der langen Schenkel entsprechend den Dreieckspitzen 10a, 16a von Fig. 4 sind hier mit Einpreßhülsen 73 versehen, in denen axial bewegliche, nicht gezeigte Raststifte gelagert sind. In einer axial ausgefahrenen Arretierungsstellung ragen diese Raststifte analog zu den Raststiften 48 nach Fig. 9 in ein ausgewähltes Loch 74 eines als Lochleiste ausgebildeten, oberen bzw. unteren Rahmenteils 75, 76 des Bauteils 7. Zur Entarretierung werden die Raststifte aus dem betreffenden Loch 74 herausgezogen. Zu diesem Zweck dienen z. B. nicht gezeigte Bowdenzüge, die einerseits mit den Einpreßbuchsen 73 und den Raststiften und andererseits mit einem Bedienungshebel 77 verbunden sind, der durch nicht dargestellte Federn in eine Arretierungsstellung vorgespannt ist. Dieser Bedienungshebel 77 kann wie die Schieber 52, 57 nach Fig. 8 am Bauteil 7 schwenkbar gelagert sein. Ein vorteilhaftes Ausführungsbeispiel sieht dagegen vor (Fig. 12), den Bedienungshebel 77 in einem oberen Bereich des verschiebbaren Bauteils 8 zu lagern und dieses gleichzeitig mit Grifflöchern 78 zu versehen, wie Fig. 12 deutlich zeigt. Dadurch ist es möglich, das Bauteil 8, wenn eine Lageänderung erwünscht ist, an den Grifflöchern 78 zu erfassen und gleichzeitig mittels des Bedienungshebels 77 die Raststifte aus den Löchern 74 herauszuziehen. Nach erfolgter Lageänderung wird der Bedienungshebel 77 losgelassen, wodurch automatisch die Arretierungsstellung wieder hergestellt wird. Im übrigen können auch beim Ausführungsbeispiel nach Fig. 12 nicht dargestellte, in Führungsschienen laufende Laufrollen vorgesehen sein, um das Verschieben der die Einpreßbuchsen 73 tragenden Dreieckspitzen der Schenkel 61, 62 bzw. 66, 67 zu erleichtern.

Die Erfindung ist nicht auf die beschriebenen Ausführungsbeispiele beschränkt, die auf vielfache Weise abgewandelt werden können. Beispielsweise ist es möglich, das Arretierungsmittel mit anderen, insbesondere auch elektrischen, elektromagnetischen, hydraulischen, pneumatischen oder sonstigen, zum Lösen der Raststifte 48 aus den Löchern 38 bzw. 74 geeigneten Einrichtungen zu versehen, die auch drehbare Spindeln aufweisen können. Außerdem kann es vorteilhaft sein, anstatt der mittels der Löcher 38, 74 nur stufenweise gegebenen Einstellbarkeit der langen Schenkel eine kontinuierliche Verstellbarkeit vorzusehen, indem die langen Schenkel z. B. mit Klemmorganen am Bauteil 7 festgelegt werden. Dabei kann der Verstellweg je nach Bedarf unterschiedlich gewählt werden und sich abweichend von Fig. 1 bis 6 auch über die ganze Breite des Montageelements erstrecken. Weiterhin können sowohl die als Festlager wirkenden Schwenklager 12, 14, 18, 19 usw. als auch die als Loslager wirkenden Kombinationen aus Laufrollen 23, 24 und Raststiften 48 od. dgl. anders als dargestellt ausgebildet sein. Dabei könnte auch von der aus Fig. 1 ersichtlichen, zur Mittelebene 20 spiegelsymmetrischen Anordnung der kurzen Schenkel 11, 17 an den Außenseiten der langen Schenkel 10, 16 abgewichen werden. Es sollte lediglich wie beschrieben dafür gesorgt sein, daß die Bauteile 7, 8 im wesentlichen parallel zum Pfeil u verschiebbar sind, ohne daß bei der Verschiebung des Bauteils 8 auch eine nicht mehr tolerierbare Verschiebung parallel zu den Pfeilen v und w erfolgt. Das kann durch entsprechende Dimensionierung der Gelenkmechanismen erreicht werden.

Weiterhin ist klar, daß die beschriebene Vorrichtung anders als dargestellt im Transportbehälter angeordnet sein kann. Beispielsweise kann das als Montageelement dienende Bauteil 7 an einer langen Seite 4, 5 (Fig. 1) des Transportbehälters angeordnet sein, in welchem Fall vorzugsweise wenigstens das als Halteelement dienende Bauteil 8 eine der Länge der langen Seite entsprechende Breite aufweisen sollte. Ferner können die beschriebenen Vorrichtungen auch in einer um 90° um eine Längsachse 79 (Fig. 2) gedrehten Stellung in den Transportbehälter 1 eingesetzt werden, in welchem Fall die verschiedenen Schwenkachsen im wesentlichen horizontal angeordnet werden und die zur Betätigung des Arretiermittels dienenden Organe zweckmäßig an dem dann oben liegenden Seitenteil 33 bzw. 34 (Fig. 8) zu liegen kommen. Möglich wäre ferner, das Bauteil 7 als Halteelement und das Bauteil 8 als Montageelement zu verwenden und/oder das jeweils bewegliche Bauteil zur leichteren Beweglichkeit auf Rollen oder Rädern abzustützen. Abgesehen davon schließt die Erfindung auch Transportbehälter ein, in denen die beschriebene Vorrichtung fest eingebaut ist. Dabei kann es zweckmäßig sein, das als Montageelement dienende Bauteil 7 ganz wegzulassen und durch eine entsprechend ausgebildete, feste Wand oder den Boden des jeweiligen Transportbehälters zu ersetzen. Das gilt insbesondere für eine weitere mögliche Anwendung der erfindungsgemäßen Vorrichtung, wobei das Bauteil 7 am Boden des Transportbehälters 1 angeordnet wird und das Bauteil 8 dazu dient, mehr oder weniger weit senkrecht nach oben verschoben zu werden. In diesem Fall können in einer Gitterbox oder dgl. zu lagernde Gegenstände je nach Bedarf in unterschiedlichen Höhen positioniert werden. Dies ist insbesondere bei einlagiger Anordnung der Gegenstände häufig erwünscht, da auf diese Weise eine geringere, aus ergonomischen Gründen zu bevorzugende Einbauhöhe erhalten wird. Die erfindungsgemäße Vorrichtung dient in diesem Fall als verschiebbarer Boden, weshalb das Bauteil 8 hier eine der Größe der Bodenfläche entsprechende Größe haben sollte.

Anstelle von je zwei Gelenkmechanismen kann auch nur ein einziger Gelenkmechanismus ausreichend sein. Außerdem können auch drei oder mehr Gelenkmechanismen vorgesehen sein, die sämtlich gleich, aber auch unterschiedlich ausgebildet sein können. In allen Fällen können die Schenkel 10, 11 bzw. 16, 17 außerdem einfache Stangen oder Rohre sein oder andere als die beschriebenen Formen aufweisen, wobei insbesondere die Schwenklager 12, 18 an jeder zweckmäßigen Stelle liegen können. Schließlich versteht sich, daß die verschiedenen Merkmale auch in anderen als den dargestellten und beschriebenen Kombinationen angewendet werden können.

## Patentansprüche

1. Vorrichtung zur Festlegung und/oder Positionierung von Gegenständen (6) in einem Transportbehälter (1) mit je einem ersten und zweiten Bauteil (7, 8), wobei eines der Bauteile (7) als ein am Transportbehälter (1) zu befestigendes Montageelement und ein anderes der Bauteile (8) als ein zur Anlage an den Gegenständen (6) bestimmtes Halteelement ausgebildet ist, mit wenigstens zwei die beiden Bauteile (7, 8) verbindenden, y-förmigen Gelenkmechanismen (9, 15), die je einen mit beiden Bauteilen (7, 8) verbundenen langen Schenkel (10, 16 bzw. 61, 62; 66, 67) sowie einen mit einem der Bauteile (7, 8) und einem mittleren Bereich des langen Schenkels (10, 16 bzw. 61, 62; 66, 67) verbundenen, kurzen Schenkel (11, 17 bzw. 64, 65; 69, 70) aufweisen, wobei einer der Schenkel zur Herstellung ausgewählter relativer Lagen der beiden Bauteile (7, 8) zueinander an einem der beiden Bauteile (7, 8) verstellbar gelagert ist, und mit einem Mittel zur Arretierung der Bauteile (7, 8) in den herstellbaren relativen Lagen, **dadurch gekennzeichnet, daß** die langen Schenkel (10, 16 bzw. 61, 62; 66, 67) dreieckförmig ausgebildet sind, wobei jeweils eine Dreieckseite schwenkbar mit einem der Bauteile (8) verbunden und eine dieser Dreieckseite gegenüber liegende Dreieckspitze (10a, 16a) verstellbar am anderen der beiden Bauteile (7) gelagert ist.

2. Vorrichtung nach Anspruch 1, **dadurch gekennzeichnet, daß** der lange Schenkel (10, 16 bzw. 61, 62; 66, 67) schwenkbar mit einem der Bauteile (8) verbunden und verstellbar am anderen der Bauteile (7) gelagert ist.

3. Vorrichtung nach Anspruch 1 oder 2, **dadurch gekennzeichnet, daß** die beiden langen Schenkel (10, 16 bzw. 61, 62; 66, 67) so ausgebildet und angeordnet sind, daß sie in einem eingeklappten Zustand übereinander bzw. nebeneinander liegen.

4. Vorrichtung nach einem der Ansprüche 1 bis 3, **dadurch gekennzeichnet, daß** die langen und kurzen Schenkel (10, 16; 11, 17) rahmenförmig ausgebildet sind.

5. Vorrichtung nach einem der Ansprüche 1 bis 4, **dadurch gekennzeichnet, daß** das Bauteil (7), an dem der lange Schenkel (10, 16 bzw. 61, 62; 66, 67) verstellbar gelagert ist, das Montageelement ist.

6. Vorrichtung nach einem der Ansprüche 1 bis 5, **dadurch gekennzeichnet, daß** sich die mit dem einen der Bauteile (8) verbundenen Dreieckseiten der langen Schenkel (10, 16 bzw. 61, 62; 66, 67) über mehr als die Hälfte einer Höhe oder Breite dieses Bauteils (8) erstrecken.

7. Vorrichtung nach einem der Ansprüche 1 bis 6, **dadurch gekennzeichnet, daß** das Mittel zur Arretierung eine mit Löchern (37, 38; 74) versehene Leiste (39, 40; 75, 76) enthält, die an demjenigen Bauteil (7) vorgesehen ist, an dem der lange Schenkel (10, 16 bzw. 61, 62; 66, 67) verstellbar gelagert ist, und daß der lange Schenkel (10, 16 bzw. 61, 62; 66, 67) an seinem verstellbar gelagerten Ende einen in die Löcher (37, 38, 74) einrastbaren Raststift (48) aufweist.

8. Vorrichtung nach einem der Ansprüche 1 bis 7, **dadurch gekennzeichnet, daß** das Mittel zur Arretierung zwei mit Löchern (37, 38; 74) versehene Leisten (39, 40; 75, 76) enthält, die an gegenüber liegenden Seiten desjenigen Bauteils (7) vorgesehen sind, an dem der je eine lange Schenkel (10, 16 bzw. 61, 62; 66, 67) von zwei Gelenkmechanismen (9, 15) verstellbar gelagert ist, und daß die beiden Schenkel (10, 16 bzw. 61, 62; 66, 67) an ihren verstellbar gelagerten Enden je einen in die Löcher (37, 38; 74) einrastbaren Raststift (48) aufweisen.

9. Vorrichtung nach Anspruch 7 oder 8, **dadurch gekennzeichnet, daß** die Leiste (39, 40; 75, 76) zur Entarretierung eines der betreffenden Raststifte (48) gegen die Kraft einer Feder (47) verschiebbar angebracht ist.

10. Vorrichtung nach Anspruch 9, **dadurch gekennzeichnet, daß** der Leiste (39, 40) wenigstens eine zur ihrer Verschiebung bestimmte Betätigungsstange (41, 42) zugeordnet ist.

11. Vorrichtung nach Anspruch 9, **dadurch gekennzeichnet, daß** der Leiste (39, 40) zwei, auf je eines ihrer Enden einwirkende Betätigungsstangen (41, 42) zugeordnet sind.

12. Vorrichtung nach Anspruch 11, **dadurch gekennzeichnet, daß** die Betätigungsstangen (41, 42) unabhängig voneinander betätigbar sind.

13. Vorrichtung nach einem der Ansprüche 8 bis 12, **dadurch gekennzeichnet, daß** beide Leisten (39, 40) mit derselben Betätigungsstange (41, 42) bzw. denselben Betätigungsstangen (41, 42) betätigbar sind.

14. Vorrichtung nach einem der Ansprüche 10 bis 13, **dadurch gekennzeichnet, daß** die Betätigungsstange (41, 42) an einer quer zu ihr angeordneten, schwenkbar mit den betreffendem Bauteil (7) verbundenen Hebel (51) angelenkt und dem Hebel (51) ein zu seiner Betätigung bestimmter, verschiebbar am Bauteil (7) gelagerter Schieber (52, 57) zugeordnet ist.

15. Vorrichtung nach einem der Ansprüche 1 bis 14, **dadurch gekennzeichnet, daß** die Arretiermittel elektrisch, elektromagnetisch, hydraulisch oder pneumatisch betätigbar sind.

16. Vorrichtung nach einem der Ansprüche 1 bis 6, **dadurch gekennzeichnet, daß** die Arretiermittel wenigstens eine durch Selbsthemmung wirksame, zur Verstellung der Bauteile (7, 8) bestimmte Spindel aufweisen.

17. Transportbehälter, **dadurch gekennzeichnet, daß** er mit einer Vorrichtung nach einem oder mehreren der Ansprüche 1 bis 8 versehen ist.

18. Transportbehälter nach Anspruch 17, **dadurch gekennzeichnet, daß** das als Montageelement ausgebildete Bauteil (7) fest, aber lösbar an einer seiner Wände befestigt ist.

19. Transportbehälter nach Anspruch 17 oder 18, **dadurch gekennzeichnet, daß** bei der Vorrichtung das als Montageelement dienende Bauteil (7) fehlt und durch eine entsprechend ausgebildete Wand oder den Boden des Transportbehälters (1) ersetzt ist.

## Claims

1. Device for securing and/or positioning objects (6) in a transport container (1) with a respective first and second structural part (7, 8), wherein one of the structural parts (7) is configured as an assembly element to be fastened to the transport container (1) and another of the structural parts (8) is configured as a holding element intended to rest against the objects (6), with at least two y-shaped articulation mechanisms (9, 15), which connect the two structural parts (7, 8) and each have a long leg (10, 16 or 61, 62; 66, 67) connected to the two structural parts (7, 8) and also a short leg (11, 17 or 64, 65; 69, 70) connected to one of the structural parts (7, 8) and a central region of the long leg (10, 16 or 61, 62; 66, 67), wherein one of the legs is adjustably mounted on one of the two structural parts (7, 8) to create selected relative positions of the two structural parts (7, 8) in relation to one another, and with a means for locking the structural parts (7, 8) in the created relative positions, **characterised in that** the long legs (10, 16 or 61, 62; 66, 67) are triangular in configuration, wherein a respective side of the triangle is pivoted to one of the structural parts (8) and a point (10a, 16a) of the triangle located opposite this side of the triangle is adjustably mounted on the other of the two structural parts (7).

2. Device according to claim 1, **characterised in that** the long leg (10, 16 or 61, 62; 66, 67) is pivoted to one of the structural parts (8) and adjustably mounted on the other of the structural parts (7).

3. Device according to claim 1 or 2, **characterised in that** the two long legs (10, 16 or 61, 62; 66, 67) are configured and arranged so that they lie one above the other or next to one another in a folded-in state.

4. Device according to one of claims 1 to 3, **characterised in that** the long and short legs (10, 16; 11, 17) is configured in the shape of a frame.

5. Device according to one of claims 1 to 4, **characterised in that** the structural part (7), on which the long leg (10, 16 or 61, 62; 66, 67) is adjustably mounted, is the assembly element.

6. Device according to one of claims 1 to 5, **characterised in that** the sides of the triangle of the long legs (10, 16 or 61, 62; 66, 67) connected to one of the structural parts (8) extend over more than half of a height or width of this structural part (8).

7. Device according to one of claims 1 to 6, **characterised in that** the locking means includes a ledge (39, 40; 75, 76) provided with holes (37, 38; 74) arranged on the structural part (7), on which the long leg (10, 16 or 61, 62; 66, 67) is adjustably mounted, and that at its adjustably mounted end the long leg (10, 16 or 61, 62; 66, 67) has a locking pin (48), which can lock into the holes (37, 38, 74).

8. Device according to one of claims 1 to 7, **characterised in that** the locking means includes two ledges (39, 40; 75, 76) provided with holes (37, 38; 74) arranged on opposite sides of the structural part (7), on which one respective long leg (10, 16 or 61, 62; 66, 67) is adjustably mounted by two articulation mechanisms (9, 15), and that at their adjustably mounted end the two legs (10, 16 or 61, 62; 66, 67) each have a locking pin (48), which can lock into the holes (37, 38, 74).

9. Device according to claim 7 or 8, **characterised in that** the ledge (39, 40; 75, 76) is attached to be displaceable for unlocking one of the respective locking pins (48) against the force of a spring (47).

10. Device according to claim 9, **characterised in that** the ledge (39, 40) has at least one associated operating rod (41, 42) intended for its displacement.

11. Device according to claim 9, **characterised in that** the ledge (39, 40) has two associated operating rods (41, 42) acting on each one of its ends.

12. Device according to claim 11, **characterised in that** the operating rods (41, 42) can be operated independently of one another.

13. Device according to one of claims 8 to 12, **characterised in that** the two ledges (39, 40) can be operated with the same operating rod (41, 42) or the same operating rods (41,42).

14. Device according to one of claims 10 to 13, **characterised in that** the operating rod (41, 42) is articulated at a lever (51) arranged transversely to it and pivoted to the respective structural part (7), and the lever (51) has an associated slide (52, 57) intended for its operation which is displaceably mounted on the structural part (7).

15. Device according to one of claims 1 to 14, **characterised in that** the locking means can be operated electrically, electromagnetically, hydraulically or pneumatically.

16. Device according to one of claims 1 to 6, **characterised in that** the locking means have at least one spindle, which is active by self-locking and is intended for adjustment of the structural parts (7, 8).

17. Transport container, **characterised in that** it is provided with a device according to one or more of claims 1 to 8.

18. Transport container according to claim 17, **characterised in that** the structural part (7) configured as mounting element is fastened firmly, but detachably to one of its walls.

19. Transport container according to claim 17 or 18, **characterised in that** the structural part (7) serving as mounting element in the device is omitted and replaced by an appropriately configured wall or the base of the transport container (1).

## Revendications

1. Dispositif de blocage et/ou de positionnement d'objets (6) dans un conteneur de transport (1), comprenant des première et seconde pièces structurelles respectives (7, 8), l'une (7) desdites pièces structurelles étant réalisée sous la forme d'un élément de montage devant être fixé au conteneur de transport (1), et une autre (8) desdites pièces structurelles étant réalisée sous la forme d'un élément de retenue destiné à venir en applique contre les objets (6) ; au moins deux mécanismes articulés (9, 15) configurés en Y, qui relient les deux pièces structurelles (7, 8) et comportent, à chaque fois, une branche longue (10, 16, respectivement 61, 62 ; 66, 67) solidarisant les deux pièces structurelles (7, 8), ainsi qu'une branche courte (11, 17, respectivement 64, 65 ; 69, 70) reliée à l'une des pièces structurelles (7, 8) et à une région centrale de ladite branche longue (10, 16, respectivement 61, 62 ; 66, 67), l'une desdites branches étant montée réglable sur l'une des deux pièces structurelles (7, 8), en vue d'établir des positions relatives sélectionnées des deux pièces structurelles (7, 8) ; et un moyen d'arrêt desdites pièces structurelles (7, 8) dans les positions relatives pouvant être établies, **caractérisé par le fait que** les branches longues (10, 16, respectivement 61, 62 ; 66, 67) sont de réalisation triangulaire, un côté respectif du triangle étant relié de manière pivotante à l'une (8) des pièces structurelles et une pointe du triangle (10a, 16a), tournée à l'opposé de ce côté du triangle, étant montée réglable sur l'autre (7) des deux pièces structurelles.

2. Dispositif selon la revendication 1, **caractérisé par le fait que** la branche longue (10, 16, respectivement 61, 62 ; 66, 67) est reliée de manière pivotante à l'une (8) des pièces structurelles, et est montée réglable sur l'autre (7) desdites pièces structurelles.

3. Dispositif selon la revendication 1 ou 2, **caractérisé par le fait que** les deux branches longues (10, 16, respectivement 61, 62 ; 66, 67) sont réalisées et agencées de manière qu'elles se trouvent, respectivement, en superposition ou en juxtaposition mutuelle à l'état rentré par pivotement.

4. Dispositif selon l'une des revendications 1 à 3, **caractérisé par le fait que** les branches longues et courtes (10, 16 ; 11, 17) sont réalisées en forme de cadre.

5. Dispositif selon l'une des revendications 1 à 4, **caractérisé par le fait que** la pièce structurelle (7), sur laquelle la branche longue (10, 16, respectivement 61, 62 ; 66, 67) est montée réglable, constitue l'élément de montage.

6. Dispositif selon l'une des revendications 1 à 5, **caractérisé par le fait que** les côtés des triangles des branches longues (10, 16, respectivement 61, 62 ; 66, 67), qui sont reliés à l'une (8) des pièces structurelles, s'étendent sur plus de la moitié d'une hauteur ou largeur de cette pièce structurelle (8).

7. Dispositif selon l'une des revendications 1 à 6, **caractérisé par le fait que** le moyen d'arrêt englobe une barrette (39, 40 ; 75, 76) munie de trous (37, 38 ; 74), prévue sur la pièce structurelle (7) sur laquelle la branche longue (10, 16, respectivement 61, 62 ; 66, 67) est montée réglable ; et **par le fait que** ladite branche longue (10, 16, respectivement 61, 62 ; 66, 67) présente, à son extrémité montée réglable, un téton encliquetable (48) pouvant se cranter dans lesdits trous (37, 38 ; 74).

8. Dispositif selon l'une des revendications 1 à 7, **caractérisé par le fait que** le moyen d'arrêt englobe deux barrettes (39, 40 ; 75, 76) munies de trous (37, 38 ; 74), prévues sur des côtés mutuellement opposés de la pièce structurelle (7) sur laquelle l'une respective des branches longues (10, 16, respectivement 61, 62 ; 66, 67) de deux mécanismes articulés (9, 15) est montée réglable ; et **par le fait que** les deux branches (10, 16, respectivement 61, 62 ; 66, 67) présentent, à leurs extrémités montées réglables, un téton encliquetable respectif (48) pouvant se cranter dans lesdits trous (37, 38 ; 74).

9. Dispositif selon la revendication 7 ou 8, **caractérisé par le fait que** la barrette (39, 40 ; 75, 76) est montée coulissante en opposition à la force d'un ressort (47), afin de neutraliser l'arrêt de l'un des tétons encliquetables (48) considérés.

10. Dispositif selon la revendication 9, **caractérisé par le fait qu'**au moins une tige d'actionnement (41, 42), assignée au coulissement de la barrette (39, 40), est associée à cette dernière.

11. Dispositif selon la revendication 9, **caractérisé par le fait que** deux tiges d'actionnement (41, 42), agissant sur l'une respective des extrémités de la barrette (39, 40), sont associées à cette dernière.

12. Dispositif selon la revendication 11, **caractérisé par le fait que** les tiges d'actionnement (41, 42) peuvent être manoeuvrées indépendamment l'une de l'autre.

13. Dispositif selon l'une des revendications 8 à 12, **caractérisé par le fait que** les deux barrettes (39, 40) sont respectivement actionnables par la même tige d'actionnement (41, 42), ou par les mêmes tiges d'actionnement (41, 42).

14. Dispositif selon l'une des revendications 10 à 13, **caractérisé par le fait que** la tige d'actionnement (41, 42) est articulée sur un levier (51) disposé transversalement vis-à-vis de ladite tige et relié de manière pivotante à la pièce structurelle (7) considérée, une pièce de coulissement (52, 57), destinée à l'actionnement dudit levier (51) et montée coulissante sur ladite pièce structurelle (7), étant associée audit levier.

15. Dispositif selon l'une des revendications 1 à 14, **caractérisé par le fait que** les moyens d'arrêt sont actionnables électriquement, électromagnétiquement, hydrauliquement ou pneumatiquement.

16. Dispositif selon l'une des revendications 1 à 6, **caractérisé par le fait que** les moyens d'arrêt comportent au moins une broche agissant par autoblocage et destinée au réglage des pièces structurelles (7, 8).

17. Conteneur de transport, **caractérisé par le fait qu'**il est équipé d'un dispositif conforme à l'une ou plusieurs des revendications 1 à 8.

18. Conteneur de transport selon la revendication 17, **caractérisé par le fait que** la pièce structurelle (7), réalisée sous la forme d'un élément de montage, est fixée par l'une de ses parois de façon rigide, mais cependant libérable.

19. Conteneur de transport selon la revendication 17 ou 18, **caractérisé par le fait que** le dispositif est dépourvu de la pièce structurelle (7) servant d'élément de montage, laquelle est remplacée par une paroi ou par le fond dudit conteneur de transport (1), doté(e) d'une réalisation correspondante.
